(19) Europäisches Patentamt
European Patent Office
Office européen des brevets

(11) **EP 3 265 221 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16706595.2**

(22) Anmeldetag: **25.02.2016**

(51) Int Cl.:
**B01J 8/08** (2006.01)    **B01J 8/18** (2006.01)

(86) Internationale Anmeldenummer:
**PCT/EP2016/053954**

(87) Internationale Veröffentlichungsnummer:
**WO 2016/139116 (09.09.2016 Gazette 2016/36)**

(54) **VORRICHTUNG ZUR HERSTELLUNG VON PULVERFÖRMIGEM POLY(METH)ACRYLAT**

DEVICE FOR PRODUCING POLY(METH)ACRYLATE IN POWDER FORM

SYSTÈME POUR FABRIQUER DU POLY(MÉTH)ACRYLATE PULVÉRULENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2015 EP 15157146**

(43) Veröffentlichungstag der Anmeldung:
**10.01.2018 Patentblatt 2018/02**

(73) Patentinhaber: **BASF SE**
**67056 Ludwigshafen (DE)**

(72) Erfinder:
• **BAYER, Robert**
**74889 Sinsheim (DE)**

• **FREIBERG, Juergen**
**68623 Lampertheim (DE)**
• **SCHLIWA, Rudolf**
**63755 Alzenau (DE)**
• **KRUEGER, Marco**
**68219 Mannheim (DE)**

(74) Vertreter: **Kudla, Karsten**
**Isenbruck Bösl Hörschler LLP**
**Patentanwälte**
**Eastsite One**
**Seckenheimer Landstrasse 4**
**68163 Mannheim (DE)**

(56) Entgegenhaltungen:
**EP-B1- 2 550 306**

**Beschreibung**

Die Erfindung geht aus von einer Vorrichtung zur Herstellung von pulverförmigem Poly(meth)acrylat, umfassend einen Reaktor zur Tropfenpolymerisation mit einer Vorrichtung zur Vertropfung einer Monomerlösung für die Herstellung des Poly(meth)acrylats mit Löchern, durch die die Monomerlösung eingebracht wird, einer Zugabestelle für ein Gas oberhalb der Vorrichtung zur Vertropfung, mindestens einer Gasentnahmestelle am Umfang des Reaktors und einer Wirbelschicht, wobei der Reaktor oberhalb der Gasentnahmestelle einen Bereich mit konstantem hydraulischem Innendurchmesser aufweist und unterhalb der Gasentnahmestelle einen hydraulischen Innendurchmesser aufweist, der stetig kleiner wird.

Poly(meth)acrylate finden Anwendung insbesondere als wasserabsorbierende Polymere, die beispielsweise bei der Herstellung von Windeln, Tampons, Damenbinden und anderen Hygieneartikeln oder auch als wasserzurückhaltende Mittel im landwirtschaftlichen Gartenbau verwendet werden.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck die Zentrifugenretentionskapazität abnimmt, wobei bei sehr hohen Vernetzungsgraden auch die Absorption unter Druck wieder abnimmt.

Zur Verbesserung der Anwendungseigenschaften, beispielsweise der Flüssigkeitsleitfähigkeit in der Windel und der Absorption unter Druck, werden wasserabsorbierende Polymerpartikel im Allgemeinen nachvernetzt. Dadurch steigt nur der Vernetzungsgrad an der Partikeloberfläche, wodurch die Absorption unter Druck und die Zentrifugenretentionskapazität zumindest teilweise entkoppelt werden können. Diese Nachvernetzung kann in wässriger Gelphase durchgeführt werden. Im Allgemeinen werden aber gemahlene und abgesiebte Polymerpartikel an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Zur Herstellung der wasserabsorbierenden Polymerpartikel sind unterschiedliche Verfahren bekannt. So können zum Beispiel die zur Herstellung von Poly(meth)acrylaten eingesetzten Monomere und gegebenenfalls Additive einem Mischkneter zugegeben werden, in dem die Monomere zum Polymer reagieren. Durch rotierende Wellen mit Knetbarren im Mischkneter wird das entstehende Polymer in Brocken zerrissen. Das dem Kneter entnommene Polymer wird getrocknet und gemahlen und einer Nachbearbeitung zugeführt. In einer alternativen Variante wird das Monomer in Form einer Monomerlösung, die auch weitere Additive enthalten kann, in einen Reaktor zur Tropfenpolymerisation eingebracht. Beim Einbringen der Monomerlösung in den Reaktor zerfällt diese in Tropfen. Bei dem Mechanismus der Tropfenbildung kann es sich um turbulenten oder laminaren Strahlzerfall oder aber auch um Vertropfung handeln. Der Mechanismus der Tropfenbildung hängt dabei von den Eintrittsbedingungen und den Stoffeigenschaften der Monomerlösung ab. Die Tropfen fallen im Reaktor nach unten, wobei das Monomer zum Polymer reagiert. Im unteren Bereich des Reaktors befindet sich eine Wirbelschicht, in die die durch die Reaktion aus den Tropfen entstehenden Polymerpartikel fallen. In der Wirbelschicht findet dann eine Nachreaktion statt. Entsprechende Verfahren sind zum Beispiel in der WO-A 2006/079631, der WO-A 2008/086976, der WO-A 2007/031441, der WO-A 2008/040715, der WO-A 2010/003855 und der WO-A 2011/026876 beschrieben.

Nachteil bei allen Verfahren, die nach dem Prinzip der Sprühtrocknung durchgeführt werden, bei denen Monomerlösung in Tropfen zerfällt und in einem Reaktor unter Bildung des Polymeren nach unten fällt, ist, dass Tropfen beim Zusammenprall koaleszieren können und an die Wandung des Reaktors prallende Tropfen anhaften können und so zu einer ungewünschten Belagbildung führen können.

Aufgabe der vorliegenden Erfindung ist es daher, eine Vorrichtung zur Herstellung von pulverförmigem Poly(meth)acrylat mit einem Reaktor zur Tropfenpolymerisation bereitzustellen, bei der eine Belagbildung an der Wandung des Reaktors vermieden oder zumindest stark reduziert wird.

Gelöst wird die Aufgabe durch eine Vorrichtung zur Herstellung von pulverförmigem Poly(meth)-acrylat, umfassend einen Reaktor zur Tropfenpolymerisation mit einer Vorrichtung zur Vertropfung einer Monomerlösung für die Herstellung des Poly(meth)acrylats mit Löchern, durch die die Monomerlösung eingebracht wird, einer Zugabestelle für ein Gas oberhalb der Vorrichtung zur Vertropfung, mindestens einer Gasentnahmestelle am Umfang des Reaktors und einer Wirbelschicht, wobei der Reaktor oberhalb der Gasentnahmestelle einen Bereich mit konstantem hydraulischem Innendurchmesser aufweist und unterhalb der Gasentnahmestelle einen hydraulischen Innendurchmesser aufweist, der stetig kleiner wird, wobei der Reaktor im Bereich mit stetig kleiner werdendem hydraulischem Innendurchmesser eine Beheizung aufweist.

Bei der Herstellung von Poly(meth)acrylaten in einem Reaktor zur Tropfenpolymerisation hat sich gezeigt, dass Anbackungen innerhalb des Reaktors im Wesentlichen im unteren Bereich, insbesondere in dem Teil, in dem der hydraulische Innendurchmesser des Reaktors abnimmt, auftritt. Überraschenderweise hat sich gezeigt, dass durch die Beheizung des Reaktors im Bereich des Reaktors mit abnehmendem hydraulischem Innendurchmesser eine Belagbildung weitgehend verhindert werden kann.

Der hydraulische Durchmesser $d_h$ berechnet sich zu:

$$d_h = 4 \cdot A/U$$

wobei A die Fläche und U der Umfang ist. Durch die Verwendung des hydraulischen Durchmessers ist die Gestaltung des Reaktors unabhängig von der Form der Querschnittsfläche.

Diese kann zum Beispiel kreisförmig, rechteckig, in Form eines beliebigen Polygons, oval oder elliptisch sein. Bevorzugt ist jedoch eine kreisförmige Querschnittsfläche.

Ein Reaktor zur Tropfenpolymerisation umfasst im Allgemeinen ein Kopf mit einer Vorrichtung zur Vertropfung einer Monomerlösung, einen mittleren Bereich, durch den die vertropfte Monomerlösung fällt und zum Polymer umgewandelt wird und eine Wirbelschicht, in die die Polymertropfen fallen. Die Wirbelschicht schließt dabei den Bereich des Reaktors, in dem der hydraulische Innendurchmesser abnimmt, nach unten ab.

Damit die Monomerlösung, die die Vorrichtung zur Vertropfung verlässt, nicht an die Wandung des Reaktors gesprüht wird und um gleichzeitig den Reaktor sowohl statisch als auch vom Materialaufwand vorteilhaft zu gestalten, ist es bevorzugt, den Kopf des Reaktors in Form eines Kegelstumpfs auszubilden und die Vorrichtung zur Vertropfung im kegelstumpfförmigen Kopf des Reaktors zu positionieren.

Durch die kegelstumpfförmige Gestaltung des Kopfs des Reaktors kann im Vergleich zu einer zylindrischen Gestaltung Material eingespart werden. Zudem dient ein kegelstumpfförmig gestalteter Kopf zur Verbesserung der statischen Stabilität des Reaktors. Ein weiterer Vorteil ist, dass das Gas und die Tropfen aus der Monomerlösung besser in Kontakt miteinander gebracht werden können. Aufgrund der Problematik der Belagsbildung ließe sich die Vorrichtung zur Vertropfung auch bei zylindrischer Gestaltung des Reaktors nicht größer ausführen, jedoch wäre in diesem Fall die Querschnittsfläche für die Gaszufuhr wesentlich größer, so dass ein großer Teil des Gases eine wesentlich längere Zeit benötigen würde, bis ein Kontakt mit den Tropfen erfolgt und dieser in den die Tropfen enthaltenden Strom eingemischt wird. Zudem löst die Gasströmung bei einem Öffnungswinkel des Konus von mehr als 7° von der Oberfläche ab und bildet Wirbel, was wiederum zu einer schnelleren Durchmischung beiträgt.

Um die Höhe des Reaktors so niedrig wie möglich zu halten, ist es weiterhin vorteilhaft, wenn die Vorrichtung zur Vertropfung der Monomerlösung so weit oben wie möglich im kegelstumpfförmig gestalteten Kopf angeordnet ist. Das bedeutet, dass die Vorrichtung zur Vertropfung der Monomerlösung auf der Höhe des kegelstumpfförmig gestalteten Kopfes angeordnet ist, in der der Durchmesser des kegelstumpfförmig gestalteten Kopfes ungefähr dem Durchmesser der Vorrichtung zur Vertropfung entspricht.

Um zu vermeiden, dass die Monomerlösung, die die Vorrichtung zur Vertropfung im Bereich der äußersten Löcher verlässt, gegen die Wandung des kegelstumpfförmig gestalteten Kopfes gesprüht wird, ist es bevorzugt, wenn der hydraulische Durchmesser des kegelstumpfförmig gestalteten Kopfes in der Höhe, in der die Vorrichtung zur Vertropfung angeordnet ist, 2 bis 30 %, mehr bevorzugt 4 bis 25 % und insbesondere 5 bis 20 %, größer ist als der hydraulische Durchmesser, der zu der Fläche gehört, die durch eine die äußersten Löcher verbindende Linie umschlossen wird. Der etwas größere hydraulische Durchmesser des Kopfes stellt zudem sicher, dass Tropfen auch unterhalb des Reaktorkopfes nicht frühzeitig an die Reaktorwand prallen und dort anhaften.

Oberhalb der Vorrichtung zur Vertropfung der Monomerlösung befindet sich eine Zugabestelle für Gas, so dass Gas und Tropfen im Gleichstrom von oben nach unten durch den Reaktor strömen. Da sich im unteren Bereich des Reaktors die Wirbelschicht befindet, führt dies dazu, dass im unteren Bereich des Reaktors Gas in die entgegengesetzte Richtung von unten nach oben strömt. Da Gas sowohl von oben als auch von unten in den Reaktor eingebracht wird, ist es notwendig, das Gas zwischen der Vorrichtung zur Vertropfung der Monomerlösung und der Wirbelschicht zu entnehmen. Bevorzugt ist die Gasentnahmestelle am Übergang von der zylindrischen Wandung des Reaktors zum Bereich mit abnehmendem hydraulischen Innendurchmesser positioniert. Durch die entsprechende Querschnittserweiterung auf den maximalen Reaktordurchmesser auf Höhe der Gasentnahmestelle wird ein Partikelmitriss in das Reaktorabgas verhindert. Die Querschnittsfläche des Gasentnahmeringes ist dabei so groß, dass die mittlere Gasgeschwindigkeit im Ring 0,25 bis 3 m/s, bevorzugt 0,5 bis 2,5 m/s und insbesondere 1,0 bis 1,8 m/s beträgt. Kleinere Werte verringern zwar den Partikelmitriss, führen jedoch zu unwirtschaftlich großen Dimensionen, größere Werte führen zu einem unerwünscht hohen Partikelmitriss.

Der Bereich des Reaktors, an dem die Gasentnahmestelle positioniert ist, ist dabei vorzugsweise so gestaltet, dass der Durchmesser des Bereichs mit abnehmendem hydraulischem Innendurchmesser an deren oberen Ende größer ist als der Durchmesser des oberen Teils des Reaktors. Das von oben durch den Reaktor strömende Gas umströmt das untere Ende der Reaktorwandung des oberen Teils und wird über mindestens einen Gasabzug aus dem zwischen dem oberen Ende des Bereichs mit abnehmendem hydraulischem Innendurchmesser und dem in den Bereich mit abnehmendem hydraulischem Innendurchmesser hineinragenden unteren Ende der Reaktorwandung gebildeten ringförmigen Raum entnommen. An den Gasabzug ist eine Vorrichtung zur Abtrennung von Feststoffen angeschlossen, in der Polymerpartikel, die mit der Gasströmung aus dem Reaktor abgezogen werden, abgetrennt werden können. Als Vorrichtung zur Abtrennung von Feststoffen eignen sich zum Beispiel Filter oder Fliehkraftabscheider, beispielsweise Zyklone. Besonders bevorzugt sind Zyklone.

Der hydraulische Durchmesser der Wirbelschicht wird erfindungsgemäß so gewählt, dass die Fläche der Wirbelschicht mindestens so groß ist, dass ein senkrecht nach unten fallender Tropfen aus den äußersten Löchern der Vorrichtung zur Vertropfung in die Wirbelschicht fällt. Hierzu ist die Fläche der Wirbelschicht mindestens genauso groß und genauso geformt wie die Fläche, die von einer die äußersten Löcher der Vorrichtung zur Vertropfung verbindenden Linie gebildet wird. Weiterhin ist es auch möglich, dass die Oberfläche der Wirbelschicht größer ist als die Fläche, die von der die äußersten Löcher der Vorrichtung zur Vertropfung verbindenden Linie gebildet wird. Besonders bevorzugt ist es dabei, wenn die Oberfläche der Wirbelschicht 5 bis 50 %, mehr bevorzugt 10 bis 40 % und insbesondere 15 bis 35 % größer ist als die von der die äußersten Löcher der Vorrichtung zur Vertropfung verbindenden Linie gebildete Fläche. Hierbei entspricht die Form der Oberfläche der Wirbelschicht jeweils der Form der Fläche, die von der die äußersten Löcher verbindenden Linie umschlossen wird. Wenn zum Beispiel die Oberfläche der Wirbelschicht kreisförmig ist, ist auch die von der die äußersten Löcher verbindenden Linie umschlossene Fläche kreisförmig, wobei der Durchmesser der Oberfläche der Wirbelschicht größer sein kann als der Durchmesser der Fläche, die von der die äußersten Löcher der Vorrichtung zur Vertropfung verbindenden Linie gebildet wird.

Üblicherweise tritt die Monomerlösung in Form eines Flüssigkeitsstrahls aus den Löchern der Vorrichtung zur Vertropfung aus, der dann im Reaktor in Tropfen zerfällt. Der Zerfall des Flüssigkeitsstrahls hängt zum einen von der Menge der Flüssigkeit ab, die durch die Löcher pro Zeiteinheit austritt, zum anderen von der Geschwindigkeit und Menge des durch den Reaktor strömenden Gases. Weiterhin beeinflussen die Stoffeigenschaften der Monomerlösung und die Geometrie der Löcher die Art des Strahlzerfalles. Im Rahmen der vorliegenden Erfindung wird der Tropfenzerfall auch als Eintropfen oder Vertropfen bezeichnet.

Damit genug Gas an der Vorrichtung zur Vertropfung der Monomerlösung vorbeiströmen kann, so dass eine gleichmäßige Gasgeschwindigkeit im Reaktor erzielt werden kann und keine zu große Beschleunigung und Verwirbelung des Gases beim Umströmen der Vorrichtung erfolgt, ist es weiterhin bevorzugt, wenn das Verhältnis der von der Vorrichtung zur Vertropfung abgedeckten Fläche in dem Reaktor bezogen auf die Fläche, die von der die äußersten Löcher verbindenden Linie umschlossen wird, kleiner als 50% ist und bevorzugt im Bereich zwischen 3 und 30 % liegt.

Weiterhin ist es bevorzugt, wenn die Anzahl der Löcher bezogen auf die Fläche, die durch die die äußersten Löcher verbindende Linie gebildet wird, im Bereich von 100 bis 1000 Löchern/m$^2$, bevorzugt im Bereich von 150 bis 800 Löcher/m$^2$ und insbesondere im Bereich von 200 bis 500 Löcher/m$^2$ liegt. Hierdurch wird sichergestellt, dass die an den Löchern gebildeten Tropfen einen ausreichend großen Abstand voneinander haben und zudem ausreichend mit dem durch den Reaktor strömenden Gas in Kontakt kommen können.

In einer Ausführungsform umfasst die Vorrichtung zur Vertropfung der Monomerlösung Kanäle, an deren Unterseite die Löcher ausgebildet sind und die sternförmig angeordnet sind. Durch die sternförmige Anordnung der Kanäle ist es insbesondere in einem Reaktor mit kreisförmigem Querschnitt möglich, eine gleichmäßige Verteilung der Tropfen im Reaktor zu erhalten. Die Zugabe erfolgt durch die Kanäle, in die die Monomerlösung eingeleitet wird. Durch die Löcher an der Unterseite der Kanäle tritt die Flüssigkeit aus und bildet die Tropfen.

Damit die aus den Kanälen austretenden Tropfen schnellstmöglich mit dem die Kanäle umströmenden Gas in Kontakt kommen, ist es weiterhin bevorzugt, wenn die Kanäle eine möglichst geringe Breite aufweisen. Die Breite der Kanäle liegt dabei vorzugsweise im Bereich von 25 bis 500 mm, weiter bevorzugt im Bereich von 100 bis 400 mm und insbesondere im Bereich von 150 bis 350 mm.

In einer bevorzugten Ausführungsform ist die Beheizung im Bereich des Reaktors mit stetig kleiner werdendem hydraulischen Innendurchmesser so ausgelegt, dass diese eine Heizleistung im Bereich von 20 bis 3000 W/m$^2$ einbringt. Bevorzugt liegt die Heizleistung im Bereich von 100 bis 3000 W/m$^2$ und insbesondere im Bereich von 200 bis 1500 W/m$^2$. Eine Heizleistung unterhalb von 20 W/m$^2$ ist nicht ausreichend, um Anbackungen zu vermeiden, eine Heizleistung oberhalb von 5000 W/m$^2$ führt zu einer irreversiblen Schädigung des an die Wandung des Reaktors anprallenden Materials und somit zu einer minderwertigen Produktqualität.

Die Beheizung kann durch jede beliebige, dem Fachmann bekannte Heizeirichtung realisiert werden. So ist es zum Beispiel möglich, zur Beheizung eine elektrische Heizung einzusetzen. Alternativ kann die Beheizung zum Beispiel auch durch eine direkte Befeuerung, beispielsweise mit Gas oder Öl realisiert werden. Bevorzugt ist es jedoch, wenn der Mantel zur Beheizung als Doppelmantel oder in Form von Heizschlangen, die außen auf dem Mantel aufgebracht sind, ausgeführt ist, wobei der Doppelmantel oder die Heizschlagen von einem Heizmedium durchströmt werden. Geeignete Heizmedien sind zum Beispiel Thermalöl, Wasser oder Wasserdampf. Besonders bevorzugt ist eine Beheizung mit Wasserdampf.

Wenn zur Beheizung auf dem Mantel des Reaktors Heizschlangen aufgebracht sind, verlaufen diese vorzugsweise mäanderförmig, so dass die Wärme durch die Heizschlangen gleichmäßig eingebracht wird.

Der Bereich des Reaktors mit stetig kleiner werdendem hydraulischem Innendurchmesser kann jeden beliebigen Verlauf aufweisen, wobei es besonders bevorzugt ist, wenn der Bereich mit stetig kleiner werdendem hydraulischem Innendurchmesser konisch ist. Der konische Verlauf hat den Vorteil, dass Polymerpartikel, die sich aus den Tropfen während ihres Falles durch Polymerisation der Monomerlösung gebildet haben, in die Wirbelschicht fallen können ohne zusammen mit dem Abgas aus dem Reaktor abgesaugt zu werden. Polymerpartikel, die direkt auf den Bereich mit stetig kleiner werdendem hydraulischem Innendurchmesser auftreffen, können in die Wirbelschicht rutschen.

Um das Rutschen der Polymerpartikel auf der Wandung des Bereichs des Reaktors mit stetig kleiner werdendem hydraulischem Innendurchmesser zu unterstützen, ist es möglich, im Bereich mit stetig kleiner werdendem hydraulischem Innendurchmesser an der Außenseite des Reaktors mechanische oder pneumatische Abreinigungsvorrichtungen anzubringen. Da Anbackungen insbesondere im unteren Bereich des Reaktors auftreten, diese jedoch auch oberhalb des Bereichs mit stetig abnehmendem hydraulischem Innendurchmesser auftreten können, ist es bevorzugt, wenn zusätzlich im unteren Drittel des Bereichs des Mantels mit konstantem hydraulischem Innendurchmesser an der Außenseite des Reaktors mechanische oder pneumatische Abreinigungsvorrichtungen angebracht sind.

Geeignete mechanische oder pneumatische Abreinigungsvorrichtungen sind zum Beispiel Klopfer. Alternativ zu Klopfern können jedoch zum Beispiel auch Vibrations-Übertrager, Ultraschall-Übertrager, bewegliche Schaber oder Rührorgane sowie Gasdüsen als mechanische oder pneumatische Abreinigungsvorrichtung eingesetzt werden. Weiterhin kann die Reaktorwandung mit geeigneten Anti-Haftmitteln wie PTFE, Polyamid, Polyurethan oder Silikon behandelt beziehungsweise beschichtet werden oder sogar komplett aus solchem Materialen bestehen. Ausführungsbeispiele der Erfindung sind in den Figuren dargestellt und werden in der nachfolgenden Beschreibung näher erläutert.

Es zeigen:

Figur 1    einen Längsschnitt durch einen Reaktor zur Tropfenpolymerisation,

Figur 2    eine schematische Darstellung des Bereichs mit stetig abnehmendem hydraulischem Innendurchmesser mit Heizschlangen und Klopfern.

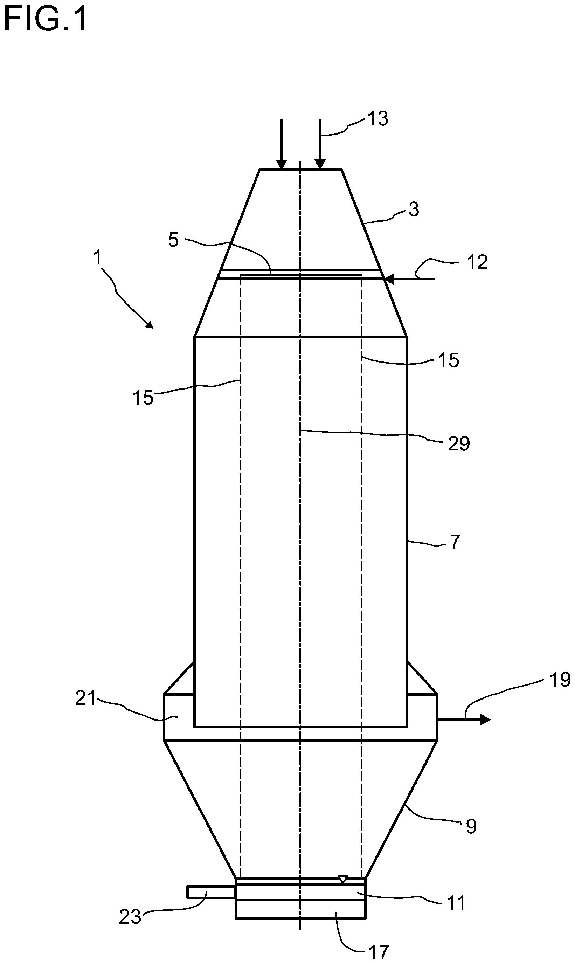

Figur 1 zeigt einen Längsschnitt durch einen erfindungsgemäß ausgebildeten Reaktor.

Ein Reaktor 1 zur Tropfenpolymerisation umfasst einen Reaktorkopf 3, in dem eine Vorrichtung zur Vertropfung 5 aufgenommen ist, einen mittleren Bereich 7, in dem die Polymerisationsreaktion erfolgt und einen unteren Bereich 9 mit einer Wirbelschicht 11, in der die Reaktion abgeschlossen wird.

Zur Durchführung der Polymerisationsreaktion zur Herstellung des Poly(meth)acrylats wird der Vorrichtung zur Vertropfung 5 eine Monomerlösung über eine Monomerzufuhr 12 zugeführt. Wenn die Vorrichtung zur Vertropfung 5 mehrere Kanäle aufweist, ist es bevorzugt, jedem Kanal über eine eigene Monomerzufuhr 12 die Monomerlösung zuzuführen. Die Monomerlösung tritt durch in Figur 1 nicht dargestellte Löcher in der Vorrichtung zur Vertropfung 5 aus und zerfällt in einzelne Tropfen, die im Reaktor nach unten fallen. Über eine erste Zugabestelle für ein Gas 13 oberhalb der Vorrichtung zur Vertropfung 5 wird ein Gas, beispielsweise Stickstoff oder Luft, in den Reaktor 1 eingeleitet. Die Gasströmung unterstützt dabei den Zerfall der aus den Löchern der Vorrichtung zur Vertropfung 5 austretenden Monomerlösung in einzelne Tropfen. Zusätzlich wird durch die Gasströmung unterstützt, dass sich die einzelnen Tropfen nicht berühren und zu größeren Tropfen koaleszieren.

Um zum Einen den zylindrischen mittleren Bereich 7 des Reaktors möglichst kurz zu gestalten und zudem zu vermeiden, dass Tropfen an die Wandung des Reaktors 1 prallen, ist der Reaktorkopf 3 vorzugsweise, wie hier dargestellt, konisch ausgebildet, wobei sich die Vorrichtung zur Vertropfung 5 im konischen Reaktorkopf 3 oberhalb des zylindrischen Bereichs befindet. Alternativ ist es allerdings auch möglich, den Reaktor auch im Reaktorkopf 3 zylindrisch mit einem Durchmesser wie im mittleren Bereich 7 zu gestalten. Bevorzugt ist jedoch eine konische Gestaltung des Reaktorkopfs 3. Die Position der Vorrichtung zur Vertropfung 5 wird so gewählt, dass zwischen den äußersten Löchern, durch die die Monomerlösung zugeführt wird und der Wandung des Reaktors noch ein ausreichend großer Abstand ist, um ein Anprallen der Tropfen an die Wandung zu verhindern. Hierzu sollte der Abstand mindestens im Bereich von 50 bis 1500 mm, bevorzugt im Bereich von 100 bis 1250 mm und insbesondere im Bereich von 200 bis 750 mm liegen. Selbstverständlich ist auch ein größerer Abstand zur Wandung des Reaktors möglich. Dies hat jedoch den Nachteil, dass mit einem größeren Abstand eine schlechtere Ausnutzung des Reaktorquerschnittes einhergeht.

Der untere Bereich 9 schließt mit einer Wirbelschicht 11 ab, in die die während des Falls aus den Monomertropfen entstandenen Polymerpartikel fallen. In der Wirbelschicht erfolgt die Nachreaktion zum gewünschten Produkt. Erfindungsgemäß sind die äußersten Löcher, durch die die Monomerlösung vertropft wird, so positioniert, dass ein senkrecht nach unten fallender Tropfen in die Wirbelschicht 11 fällt. Dies kann zum Beispiel dadurch realisiert werden, dass der hydraulische Durchmesser der Wirbelschicht mindestens so groß ist wie der hydraulische Durchmesser der Fläche, die von einer die äußersten Löcher in der Vorrichtung zur Vertropfung 5 verbindenden Linie umschlossen wird, wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden. Die äußerste Position der äußeren Löcher bezogen auf die Position der Wirbelschicht 11 ist in Figur 1 mit Hilfe einer gestrichelten Linie 15 dargestellt.

Um weiterhin zu vermeiden, dass Tropfen auch im mittleren Bereich 7 an die Wandung des Reaktor prallen, ist der hydraulische Durchmesser auf Höhe der Mitte zwischen der Vorrichtung zur Vertropfung und der Gasentnahmestelle mindestens 10% größer als der hydraulische Durchmesser der Wirbelschicht.

Der Reaktor 1 kann dabei jede beliebige Querschnittsform aufweisen. Bevorzugt ist der Querschnitt des Reaktors 1 jedoch kreisförmig. In diesem Fall entspricht der hydraulische Durchmesser dem Durchmesser des Reaktors 1.

Oberhalb der Wirbelschicht 11 nimmt der Durchmesser des Reaktors 1 in der hier dargestellten Ausführungsform zu, so dass sich der Reaktor 1 im unteren Bereich 9 von unten nach oben konisch erweitert. Dies hat den Vorteil, dass im Reaktor 1 entstandene Polymerpartikel, die auf die Wandung treffen, an der Wandung nach unten in die Wirbelschicht 11 rutschen können. Zur Vermeidung von Anbackungen können zusätzlich hier nicht dargestellte Klopfer außen am konusförmigen Teil des Reaktors vorgesehen sein, mit denen die Wandung des Reaktors in Schwingungen versetzt wird, wodurch sich anhaftende Polymerpartikel lösen und in die Wirbelschicht 11 rutschen.

Zur Gaszufuhr für den Betrieb der Wirbelschicht 11, befindet sich unterhalb der Wirbelschicht 11 ein Gasverteiler 17, durch den das Gas in die Wirbelschicht 11 eingeblasen wird.

Da sowohl von oben als auch von unten Gas in den Reaktor 1 eingeleitet wird, ist es erforderlich, an einer geeigneten Position Gas aus dem Reaktor 1 zu entnehmen. Hierzu ist am Übergang vom mittleren Bereich 7 mit konstantem Querschnitt zum sich konisch von unten nach oben erweiternden unteren Bereich 9 mindestens eine Gasentnahmestelle 19 angeordnet. Hierbei ragt der zylindrische mittlere Bereich 7 mit seiner Wandung in den sich nach oben konisch erweiternden unteren Bereich 9 hinein, wobei der Durchmesser des konischen unteren Bereichs 9 an dieser Position größer ist als der Durchmesser des mittleren Bereichs 7. Hierdurch wird eine die Wandung des mittleren Bereichs 7 umlaufende ringförmige Kammer 21 gebildet, in die das Gas einströmt und durch die mindestens eine Gasentnahmestelle 19, die mit der ringförmigen Kammer 21 verbunden ist, abgezogen werden kann. Die nachreagierten Polymerpartikel der Wirbelschicht 11 werden über eine Produktentnahmestelle 23 im Bereich der Wirbelschicht entnommen.

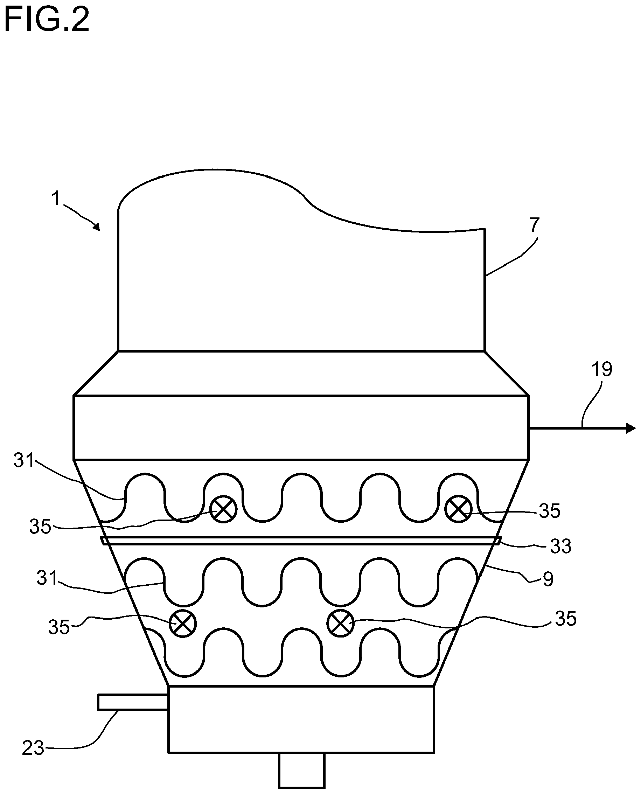

In Figur 2 ist der Bereich mit stetig abnehmendem hydraulischem Innendurchmesser mit Heizschlangen und Klopfern schematisch dargestellt.

Um die Beheizung des konischen unteren Bereichs 9 zu realisieren, ist es zum Beispiel möglich, Heizschlangen 31 außen auf den konischen unteren Bereich 9 aufzubringen. Zur Beheizung der Reaktorwandung des unteren konischen Bereichs 9 werden die Heizschlagen 31 von einem Temperiermedium, zum Beispiel Thermalöl, Wasser oder bevorzugt Dampf, durchströmt. Alternativ zu auf dem konischen unteren Bereich 9 aufgebrachten Heizschlangen 31, die von einem Temperiermedium durchströmt werden, ist es auch möglich, zum Beispiel eine elektrische Beheizung vorzusehen.

Bei von einem Temperiermedium durchströmten Heizschlangen 31 werden Temperatur und Volumenstrom des Temperiermediums so eingestellt, dass eine Heizleistung im Bereich von 20 bis 3000 $W/m^2$ in den unteren konischen Bereich 9 des Reaktors 1 eingebracht wird. Um die Wandung des unteren konischen Bereichs 9 zu stabilisieren, ist es möglich, Verstärkungsringe 33 auf der Wandung aufzubringen. Die Anordnung der Verstärkungsringe 33 und der Heizschlangen 31 ist dabei so, dass durch die Verstärkungsringe 33 das Einbringen von Wärme in den unteren konischen Bereich 9 des Reaktors 1 nicht behindert wird.

Um ergänzend zur Beheizung des unteren konischen Bereichs 9 Anbackungen zu verhindern, können zusätzlich mechanische oder pneumatische Abreinigungsvorrichtungen, zum Beispiel Klopfer 35, angebracht werden. Die Klopfer 35 werden dabei zwischen die Heizschlangen 31 positioniert, damit diese direkt auf die Wandung des unteren konischen Bereichs 9 einwirken können.

Beispiele

Zur Herstellung von Poly(meth)acrylat wird ein Reaktor zur Tropfenpolymerisation wie in Figur 1 dargestellt, eingesetzt. Der Bereich des Reaktors mit konstantem Durchmesser hat eine Höhe von 22 m und einen Durchmesser von 3,4 m. Der Durchmesser der Wirbelschicht beträgt 3 m und die Höhe 0,25 m.

Am Kopf des Reaktors wurde als Trocknungsgas Stickstoff zugeführt mit einem Restsauerstoffanteil von 1 bis 4 Vol.-%. Die Menge an Trocknungsgas wurde so eingestellt, dass die Gasgeschwindigkeit im zylindrischen Teil des Reaktors 0,8 m/s betrug. Am Produktauslass wurde die Temperatur gemessen und während des Betriebs des Reaktors durch Einstellung der Temperatur des Trocknungsgases auf 117°C gehalten.

Das Gas zur Erzeugung der Wirbelschicht wurde mit einer Temperatur von 122°C und einer relativen Feuchte von 4% zugeführt. Die Gasgeschwindigkeit in der Wirbelschicht betrug 0,8 m/s und die Verweilzeit des Produkts in der Wirbelschicht lag bei 120 min. Das Produkt wurde dem Reaktor über eine Zellradschleuse entnommen und einem Fließbett mit einer Länge von 3 m, einer Breite von 0,65 m und einer Höhe von 0,5 m zugeführt. Das dem Fließbett zugeführte Gas hatte eine Temperatur von 60°C und die Gasmenge wurde so eingestellt, dass die Gasgeschwindigkeit im Fließbett 0,8 m/s betrug. Als Gas wurde Luft eingesetzt. Die Verweilzeit des Produkts im Fließbett betrug 1 min. Das dem Fließbett entnommene Produkt wurde abschließend gesiebt, um Partikel mit einem Partikeldurchmesser von mehr als 800 µm zu entfernen.

Zur Herstellung der dem Reaktor zugeführten Monomerlösung wurde zunächst Acrylsäure mit 3-fach ethoxyliertem Glycerintriacetat als Vernetzer und anschließend mit 37,3 Gew.-% Natriumacrylatlösung gemischt. Die Monomerlösung wurde auf eine Temperatur von 10°C temperiert. Vor Zugabe der Monomerlösung in den Reaktor wurden als Initiatoren Natriumperoxodisulfat-Lösung mit einer Temperatur von 20°C und [2,2'-Azobis[2-(2-imidazolin-2-yl)propan]dihydrochlorid zusammen mit Bruggolite® FF7 mit einer Temperatur von 5°C mittels einem statischen Mischer zugemischt. Die Zugabe in den Reaktor erfolgte über 3 Kanäle mit Vertropferkassetten, die jeweils an ihrer Unterseite mit einer Vertropferplatte mit 256 Bohrungen mit einem Durchmesser von 170 $\mu$m und einem Abstand der Bohrungen von 15 mm verschlossen waren.

Die Vertropferkassetten wurden mit Hilfe von Wasser, das durch die Vertropferkassetten umlaufende Kanäle strömte, auf eine Temperatur von 8°C temperiert.

Die Vertropferplatten waren entlang ihrer Mittelachse gewinkelt mit einem Winkel von 3° zur Horizontalen. Als Material für die Vertropferplatten wurde Edelstahl genutzt. Die Länge der Vertropferplatten betrug 630 mm, die Breite 128 mm und die Höhe 1 mm.

Die dem Reaktor zugeführte Monomerlösung enthielt 10,45 Gew.-% Acrylsäure, 33,40 Gew.-% Natriumacrylat, 0,018 Gew.-% 3-fach ethoxyliertes Glycerintriacetat, 0,072 Gew.-% [2,2'-Azo-bis[2-(2-imidazolin-2-yl)propan]dihydrochlorid, 0,0029 Gew.-% einer 5 gew.-%igen Lösung Bruggolite® FF7 in Wasser, 0,054 Gew.-% einer 15 gew.-%igen Lösung Natriumperoxodisulfat in Wasser und Wasser. Zugeführt wurden dem Reaktor 1,6 kg/h Monomerlösung je Bohrung.

Der untere konische Bereich des Reaktors hatte eine Fläche von 24,75 m² und eine Wandstärke von 5 mm. Die Beheizung des unteren Bereichs erfolgte elektrisch. Zusätzlich waren 6 pneumatische Klopfer PKL 2100/5 der Firma Netter am unteren konischen Bereich montiert. Jeder Klopfer wurde mit so angesteuert, dass dieser mit einem Intervall von 50s zwei Schläge mit einem Abstand von 3s erzeugte.

Das dem Reaktor entnommene Produkt hatte eine Schüttdichte von 680 g/l und einen mittleren Partikeldurchmesser von 407 $\mu$m.

Es wurden mehrere Versuche mit unterschiedlicher Heizleistung der Beheizung des unteren konischen Bereichs durchgeführt. Die Heizleistung und die Ergebnisse sind in Tabelle 1 dargestellt.

Tabelle 1: Heizleistung und Ergebnisse

| Beispiel | eingebrachte spezifische Wärme [W/m²] | Mittlere Betriebsdauer bis zum Abschalten und Ergebnisse |
|---|---|---|
| 1 | 0 | Abschalten und Reinigung nach 4,5 Stunden notwendig |
| 2 | 55 | Abschalten und Reinigung nach 36 Stunden notwendig |
| 3 | 240 | Abschalten und Reinigung nach 9 Stunden notwendig |
| 4 | 1200 | Betriebszeit länger als 14 Tage, kontrollierte Belagbildung |
| 5 | 3750 | Betriebszeit länger als 14 Tage, kontrollierte Belagbildung, erhöhte Gelbfärbung des Produkts |

Wie Tabelle 1 entnommen werden kann, nimmt die Betriebsdauer mit zunehmender Heizleistung zu. Insbesondere bei geringen Heizleistungen tritt eine Belagbildung auf, die dazu führt, dass der Prozess beendet werden muss, um den Reaktor zu reinigen. Wie der Tabelle zu entnehmen ist, führt bereits eine kleine Heizleistung zu einer deutlich längeren Betriebsdauer im Vergleich zum Betrieb ohne Beheizung des unteren konischen Bereichs.

Eine zu hohe Heizleistung führt andererseits nicht zu einer Verlängerung der Betriebsdauer, jedoch nimmt die Produktqualität ab, was sich in Beispiel 5 durch die Gelbfärbung des Produkts gezeigt hat.

Bezugszeichenliste

1 Reaktor
3 Reaktorkopf
5 Vorrichtung zur Vertropfung
7 mittlerer Bereich
9 unterer Bereich
11 Wirbelschicht

12    Monomerzufuhr
13    Zugabestelle für Gas
15    Position der äußersten Löcher in Bezug zur Wirbelschicht 11
17    Gasverteiler
19    Gasentnahmestelle
21    ringförmige Kammer
23    Produktentnahmestelle
29    Reaktorachse
31    Heizschlange
33    Verstärkungsring
35    Klopfer

**Patentansprüche**

1.  Vorrichtung zur Herstellung von pulverförmigem Poly(meth)acrylat, umfassend einen Reaktor (1) zur Tropfenpolymerisation mit einer Vorrichtung (5) zur Vertropfung einer Monomerlösung für die Herstellung des Poly(meth)acrylats mit Löchern, durch die die Monomerlösung eingebracht wird, einer Zugabestelle (13) für ein Gas oberhalb der Vorrichtung (5) zur Vertropfung, mindestens einer Gasentnahmestelle (19) am Umfang des Reaktors (1) und einer Wirbelschicht (11), wobei der Reaktor (1) oberhalb der Gasentnahmestelle (19) einen Bereich mit konstantem hydraulischem Innendurchmesser aufweist und unterhalb der Gasentnahmestelle (19) einen hydraulischen Innendurchmesser aufweist, der stetig kleiner wird, **dadurch gekennzeichnet, dass** der Reaktor (1) im Bereich mit stetig kleiner werdendem hydraulischem Innendurchmesser eine Beheizung (31) aufweist, wobei die Beheizung (31) eine Heizleistung im Bereich von 20 bis 3000 W/m$^2$ einbringt.

2.  Vorrichtung gemäß Anspruch 1, **dadurch gekennzeichnet, dass** die Beheizung (31) eine elektrische Heizung ist.

3.  Vorrichtung gemäß Anspruch 1, **dadurch gekennzeichnet, dass** die Beheizung als Doppelmantel oder in Form von Heizschlangen (31), die außen auf dem Reaktormantel aufgebracht sind, ausgeführt ist, wobei der Doppelmantel oder die Heizschlagen (31) von einem Heizmedium durchströmt werden.

4.  Vorrichtung gemäß einem der Ansprüche 1 bis 3, **dadurch gekennzeichnet, dass** der Bereich mit stetig kleiner werdendem hydraulischem Innendurchmesser konisch ist.

5.  Vorrichtung gemäß einem der Ansprüche 1 bis 4, **dadurch gekennzeichnet, dass** im Bereich mit stetig kleiner werdendem hydraulischem Innendurchmesser an der Außenseite des Reaktors (1) mechanische oder pneumatische Abreinigungsvorrichtungen (35) angebracht sind.

6.  Vorrichtung gemäß einem der Ansprüche 1 bis 5, **dadurch gekennzeichnet, dass** im unteren Drittel des Bereichs des Mantels mit konstantem hydraulischem Innendurchmesser an der Außenseite des Reaktors mechanische oder pneumatische Abreinigungsvorrichtungen (35) angebracht sind.

7.  Vorrichtung gemäß Anspruch 5 oder 6, **dadurch gekennzeichnet, dass** die mechanischen oder pneumatischen Abreinigungsvorrichtungen Klopfer (35) sind.

**Claims**

1.  An apparatus for producing pulverulent poly(meth)acrylate, comprising a reactor (1) for droplet polymerization comprising an apparatus (5) for dropletization of a monomer solution for the production of the poly(meth)acrylate comprising holes through which the monomer solution is introduced, an addition point (13) for a gas above the apparatus (5) for dropletization, at least one gas withdrawal point (19) on the circumference of the reactor (1) and a fluidized bed (11), wherein above the gas withdrawal point (19) the reactor (1) comprises a region having a constant hydraulic internal diameter and below the gas withdrawal point (19) the reactor has a hydraulic internal diameter that steadily decreases, wherein the reactor (1) comprises a heating means (31) in the region having a steadily decreasing hydraulic internal diameter, wherein the heating means (31) supplies a heat output in the range of from 20 to 3000 W/m$^2$.

**2.** The apparatus according to claim 1, wherein the heating means (31) is an electric heater.

**3.** The apparatus according to claim 1, wherein the heating means is a double shell or takes the form of heating coils (31) applied to the outside of the reactor shell, wherein the double shell or the heating coils (31) have a heating medium flowing therethrough.

**4.** The apparatus according to any of claims 1 to 3, wherein the region having a steadily decreasing hydraulic internal diameter is conical.

**5.** The apparatus according to any of claims 1 to 4, wherein in the region having a steadily decreasing hydraulic internal diameter there are mechanical or pneumatic cleaning apparatuses (35) affixed to the exterior of the reactor (1).

**6.** The apparatus according to any of claims 1 to 5, wherein there are mechanical or pneumatic cleaning apparatuses (35) affixed to the exterior of the reactor in the lower third of the region of the shell having a constant hydraulic interior diameter.

**7.** The apparatus according to either of claims 5 and 6, wherein the mechanical or pneumatic cleaning apparatuses are tappers (35).

**Revendications**

**1.** Dispositif de fabrication de poly(méth)acrylate pulvérulent, comprenant un réacteur (1) pour la polymérisation de gouttes avec un dispositif (5) pour la formation de gouttes d'une solution monomère pour la fabrication du poly(méth)acrylate avec des trous, à travers lesquels la solution monomère est introduite, un point d'addition (13) pour un gaz au-dessus du dispositif (5) de formation de gouttes, au moins un point de prélèvement de gaz (19) à la périphérie du réacteur (1) et une couche fluidisée (11), dans lequel le réacteur (1) présente au-dessus du point de prélèvement de gaz (19) une zone de diamètre intérieur hydraulique constant et en dessous du point de prélèvement de gaz (19) un diamètre intérieur hydraulique, qui diminue de façon continue, **caractérisé en ce que** le réacteur (1) présente un chauffage (31) dans la région de diamètre intérieur hydraulique décroissant en continu, dans lequel le chauffage (31) fournit une puissance de chauffage dans la plage de 20 à 3000 W/m$^2$.

**2.** Dispositif selon la revendication 1, **caractérisé en ce que** le chauffage (31) est un chauffage électrique.

**3.** Dispositif selon la revendication 1, **caractérisé en ce que** le chauffage est réalisé sous la forme d'une double enveloppe ou sous la forme de serpentins de chauffage (31), qui sont installés extérieurement sur l'enveloppe du réacteur, dans lequel la double enveloppe ou les serpentins de chauffage (31) sont parcourus par un fluide de chauffage.

**4.** Dispositif selon l'une quelconque des revendications 1 à 3, **caractérisé en ce que** la zone de diamètre intérieur hydraulique décroissant en continu est conique.

**5.** Dispositif selon l'une quelconque des revendications 1 à 4, **caractérisé en ce que** des dispositifs de nettoyage mécaniques ou pneumatiques (35) sont installés sur le côté extérieur du réacteur (1) dans la zone de diamètre intérieur hydraulique décroissant en continu.

**6.** Dispositif selon l'une quelconque des revendications 1 à 5, **caractérisé en ce que** des dispositifs de nettoyage mécaniques ou pneumatiques (35) sont installés sur le côté extérieur du réacteur dans le tiers inférieur de la zone de l'enveloppe de diamètre intérieur hydraulique constant.

**7.** Dispositif selon la revendication 5 ou 6, **caractérisé en ce que** les dispositifs de nettoyage mécaniques ou pneumatiques sont des marteaux (35).

# FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079631 A
- WO 2008086976 A
- WO 2007031441 A
- WO 2008040715 A
- WO 2010003855 A
- WO 2011026876 A